Europäisches Patentamt

European Patent Office

Office européen des brevets

(19)

(11) Numéro de publication: **0 211 705 B1**

(12) **FASCICULE DE BREVET EUROPEEN**

(45) Date de publication de fascicule du brevet:
**04.09.91**

(51) Int. Cl.5: **C03C 27/12**, C03C 17/34, B32B 17/10, C09J 4/00

(21) Numéro de dépôt: **86401376.8**

(22) Date de dépôt: **23.06.86**

(54) **Procédé de fabrication d'un vitrage en verre feuilleté.**

(30) Priorité: **28.06.85 DE 3523140**

(43) Date de publication de la demande:
**25.02.87 Bulletin 87/09**

(45) Mention de la délivrance du brevet:
**04.09.91 Bulletin 91/36**

(84) Etats contractants désignés:
**AT BE CH DE FR IT LI SE**

(56) Documents cités:
**EP-A- 0 020 159**
**FR-A- 1 312 952**
**JP-A-54 090 347**

(73) Titulaire: **SAINT-GOBAIN VITRAGE INTERNA-TIONAL**
**18, avenue d'Alsace**
**F-92400 Courbevoie(FR)**

(84) Etats contractants désignés:
**BE CH FR IT LI SE AT**

Titulaire: **VEGLA VEREINIGTE GLASWERKE**
**Viktoriaallee 3-5**
**W-5100 Aachen(DE)**

(84) Etats contractants désignés:
**DE**

(72) Inventeur: **Kleine-Doepke, Wolfgang, Dr.**
**Meissmerweg 22**
**W-6100 Darmstadt(DE)**
Inventeur: **Martin, Reinhold**
**Nieder-Kinsiger Strasse 42**
**W-6123 Bad Koenig(DE)**
Inventeur: **Raedisch, Helmer, Dr.**
**Nizzaallee 36**
**W-5100 Aachen(DE)**
Inventeur: **Holzer, Gerhard, Dr.**
**Dr. Josef-Lamby Strasse 2**
**W-5100 Aachen(DE)**

(74) Mandataire: **Muller, René et al**
**SAINT-GOBAIN RECHERCHE 39, quai Lucien Lefranc**
**F-93304 Aubervilliers(FR)**

## Description

L'invention concerne un procédé de fabrication d'un vitrage en verre feuilleté consistant en au moins une feuille de verre de silicate et au moins une épaisseur d'une matière plastique transparente, suivant lequel la feuille de verre et l'épaisseur de matière plastique sont assemblées avec interposition d'une couche d'adhésif consistant en une solution homogène de monomères acryliques photopolymérisables (composant A) , d'un polymère (composant B) et d'un photoinitiateur (composant C) et sont exposées à un rayonnement UV pour le durcissement de la couche d'adhésif.

Dans un procédé de ce genre, il est connu d'utiliser un adhésif photopolymérisable qui contient un prépolymère d'ester insaturé, un monomère insaturé copolymérisable avec celui-ci et un photoinitiateur (FR-A-20 01 985).

Suivant un autre procédé connu, on utilise un adhésif photopolymérisable qui consiste en acide acrylique et en une cétone aromatique et contient éventuellement, en outre, un composé azoté du type lactame (DE-A 25 36 131).

On connaît, par ailleurs, pour l'exécution du procédé de ce genre, des systèmes d'adhésif durcissant dans l'UV qui consistent en prépolymères tels qu'ils sont connus dans la technique sous la dénomination "acrylate d'uréthane" et en diluants acryliques liquides. Comme diluants acryliques liquides, on utilise à cet effet, par exemple, le méthacrylate de diméthylaminoéthyle et l'acide acrylique (EP-A-10 355), ou bien l'acide acrylique et des monoesters de l'acide acrylique comptant 1 à 6 atomes de carbone dans le radical alcool (EP-A-108 630 et EP-A-108 631).

Il est apparu que diverses difficultés se manifestent lors de l'utilisation de ces systèmes connus d'adhésif durcissant dans l'UV. Par exemple, l'adhérence de l'adhésif à la surface du verre de silicate n'est pas toujours suffisante. En outre, lors de l'utilisation de feuilles de PVC comme matière plastique transparente, on observe l'apparition d'un trouble dans ces feuilles par contact avec l'adhésif.

L'invention a pour but, tout en maintenant le procédé cité ci-dessus pour la fabrication de vitrages en verre feuilleté, de procurer et d'utiliser des compositions adhésives qui conviennent particulièrement à cet effet sous les rapports les plus divers. En particulier, les adhésifs utilisés doivent manifester une adhérence suffisante tant à la surface du verre qu'à la surface de la matière plastique sans provoquer de trouble dans la feuille de matière plastique utilisée, mais doivent, en outre, consister en composants relativement peu onéreux et se prêter au collage de feuilles de verre de silicate à diverses matières plastiques transparentes.

Conformément à l'invention, on atteint ce résultat en utilisant comme adhésif photopolymérisable, une solution dont le composant (A) consiste en un mélange d'au moins

(a₁) un acide carboxylique $\alpha$, $\beta$–insaturé et

(a₂) au moins un ester d'acide carboxylique monofonctionnel $\alpha$, $\beta$-insaturé contenant éventuellement aussi des atomes d'oxygène sous forme de radicaux éther et/ou de radicaux hydroxyle avec un alcool de 2 à 10 atomes de carbone

et le composant (B) consiste

pour la totalité ou pour partie prépondérante en un polymère formé de chlorure de vinyle qui est éventuellement postchloré.

Il s'est révélé que ces systèmes de monomères et de polymère conformes à l'invention conviennent éminemment pour le collage de feuilles de verre de silicate à des épaisseurs de matière plastique des compositions les plus diverses. Les vitrages en verre feuilleté produits au moyen de ces systèmes d'adhésif présentent de bonnes propriétés optiques et une excellente adhérence entre la feuille de verre et l'épaisseur de matière plastique. Une importance particulière est à cet égard de façon évidente attribuable au composant (B), qui est, conformément à l'invention, pour la totalité ou pour partie prépondérante, un polymère formé de chlorure de vinyle.

Des feuilles de verre de silicate peuvent être assemblées avec des épaisseurs de polychlorure de vinyle avec un résultat particulièrement bon au moyen des systèmes d'adhésif conformes à l'invention. Par exemple, l'adhésif convient particulièrement pour la fabrication d'un vitrage de sécurité feuilleté formé de deux feuilles de verre de silicate et d'une pellicule de PVC disposée entre les premières. Il est toutefois apparu que des pellicules ou des plaques d'autres matières plastiques transparentes, par exemple de polyesters, comme le poly-(téréphtalate d'éthylène), le polycarbonate, le poly-(méthacrylate de méthyle) ou l'acétobutyrate de cellulose,peuvent aussi être collées à des feuilles de verre de silicate avec un excellent résultat au moyen de l' adhésif conforme à l'invention. Les épaisseurs de matière plastique ne doivent pas nécessairement être des pellicules ou des plaques, et, par exemple, des vitrages en verre isolant diffusant la lumière formés de deux feuilles de verre et d'une épaisseur de matière plastique mousse collée entre les premières, tels qu'ils sont décrits dans le document DE-GM-84 26 326,peuvent être fabriqués au moyen des systèmes d'adhésif conformes à l'invention. Les systèmes d'adhésif conformes à l'invention conviennent aussi pour le collage d'une pellicule pare-éclats, par exemple une pellicule de polyester sur la surface d'une feuille de verre, la pellicule de polyester pouvant elle-même être munie d'une feuille dure ou souple autocicatrisante à l'épreuve du rayage.

De façon avantageuse, le système d'adhésif conforme à l'invention présente une composition quantitative des différents composants, dans laquelle le rapport pondéral ($a_1$) : ($a_2$) des constituants de mélange photopolymérisables ($a_1$) et ($a_2$) dans la solution est de (2 à 30) : (98 à 70) et le rapport pondéral (A) : (B) : (C) des composants (A), (B) et (C) est de (95 à 70) : (5 à 30) : (0,1 à 7).

Lorsqu'il faut utiliser comme épaisseur de matière plastique, une pellicule de poly(chlorure de vinyle) ou d'un polymère qui est formé essentiellement de polychlorure de vinyle, on recourt par préférence à des pellicules de PVC qui contiennent environ 10 à 50% en poids de solvant ou de plastifiant. Ces épaisseurs de PVC souples sont moins cassantes et ont une plus grande flexibilité ce qui a un effet favorable sur les propriétés d'usage du produit feuilleté. Un exemple d'une pellicule de PVC souple particulièrement appropriée est le produit GUTTAGENA limpide T 62 de la société KALLE.

L'adhésif photopolymérisable qui est utilisé pour constituer les couches d'adhésif dans le verre feuilleté est un mélange homogène qui consiste en monomères acryliques photopolymérisables (A), en un polymère (B) consistant pour la totalité ou pour partie prépondérante en chlorure de vinyle et en un photoinitiateur (C).

Comme monomères acryliques photopolymérisables, au moins deux monomères de ce genre sont en présence dans l'adhésif. Les composés polymérisables sont ($a_1$) l'acide acrylique et/ou l'acide méthacrylique et ($a_2$) les esters de l'acide acrylique et/ou de l'acide méthacrylique avec des alcools de 2 à 10 atomes de carbone qui peuvent contenir, en outre, aussi des atomes d'oxygène sous forme de radicaux éther et/ou de radicaux hydroxyle. Le reste alcool de l'ester est issu d'un alcool aliphatique linéaire ou ramifié cycloaliphatique ou araliphatique qui peut contenir, en outre, des atomes d'oxygène sous forme de radicaux éther et/ou de radicaux hydroxyle.

Des exemples de ces esters de l'acide acrylique et de l'acide méthacrylique sont: l'acrylate d'éthyle, le méthacrylate d'isopropyle, l'acrylate de n-butyle, le méthacrylate d'i-butyle, l'acrylate de n-hexyle, le méthacrylate de n-hexyle, le méthacrylate de 2-éthylhexyle, l'acrylate de cyclohexyle, le méthacrylate de cyclohexyle, l'acrylate de 3,3,5-triméthylcyclohexyle, le méthacrylate de 3,3,5-triméthylcyclohexyle, l'acrylate de benzyle, le méthacrylate de benzyle, l'acrylate de 2-hydroxyéthyle, le méthacrylate de 2-hydroxyéthyle, l'acrylate de 2-hydroxypropyle, le méthacrylate de 2-hydroxypropyle, l'acrylate de 2-hydroxy-3-chloropropyle, le méthacrylate de 2-hydroxy-3-chloropropyle, l'acrylate de 4-hydroxybutyle, le méthacrylate de 4-hydroxybutyle, l'acrylate de 5-hydroxypentyle, le méthacrylate de 6-hydroxyhexyle et les étheresters que sont l'acrylate d'éthyldiglycol, l'acrylate d'éthyltriglycol, l'acrylate de tétrahydrofurfuryle, le méthacrylate de tétrahydrofurfuryle et l'acrylate de phénoxyéthyle.

Les esters préférés de l'acide acrylique et de l'acide méthacrylique sont l'acrylate de tétrahydrofurfuryle, l'acrylate d'éthyldiglycol, l'acrylate de 2-hydroxypropyle, le méthacrylate de 2-hydroxyéthyle, et l'acrylate de phénoxyéthyle.

La proportion d'acide polymérisable ($a_1$) en comparaison de celle d'ester polymérisable ($a_2$) dans les composants polymérisables des couches d'adhésif est plus faible. Le rapport pondéral ($a_1$) : ($a_2$) peut se situer dans l'intervalle de (2 à 30) : (98 à 70).

Le polymère (B) formé pour la totalité ou pour partie prépondérante de chlorure de vinyle en présence dans les couches d'adhésif et donc aussi dans les adhésifs conformes à l'invention, et dont le polymère est éventuellement aussi postchloré peut être un produit commercialisé, par exemple le VINNOL E 15/45, qui est un copolymère de chlorure de vinyle et d'acétate de vinyle à 84% en poids de chlorure de vinyle, c'est-à-dire ayant une teneur en chlore de 47 à 48% en poids de la société Wacker-Chemie ou le RHENOFLEX 63, qui est un PVC postchloré contenant 62 à environ 65% en poids de chlore de la société Dynamit-Nobel. Les teneurs en chlore des polymères à utiliser conformément à l'invention dans la couche d'adhésif se situent entre 35 et 70% en poids. Ces polymères se dissolvent dans les monomères acryliques à l'état limpide en les quantités à utiliser. Le rapport pondéral (A) : (B) peut se situer dans l'intervalle de (95 à 70) : (5 à 30).

Des photoinitiateurs (C) appropriés sont, par exemple, des cétones aromatiques du type de la benzophénone, de la benzoïne du benzile ou des quinones, comme par exemple les dérivés d'anthraquinone. Le cétal diméthylique de benzile qui est commercialisé sous la dénomination IRGACURE 651 comme produit de la société Ciba Geigy s'est entre autres révélé utile comme photoinitiateur dans la formulation d'une colle pour la fabrication conforme à l'invention d'un produit feuilleté verre-PVC. Avec le même succès, la 2-hydroxy-2-méthyl-1-phénylpropan-1-one, qui est par exemple disponible sous la marque commerciale DAROCURE 1173 comme produit de la société Merck, peut être utilisée comme photoinitiateur. Suivant la longueur d'onde de la lumière à utiliser pour la photopolymérisation, d'autres photoinitiateurs éventuellement même plusieurs ensemble, peuvent être utilisés aussi. La quantité de l'initiateur utilisé dans la colle est d'environ 0,1 à 7% en poids sur base du poids total de l'adhésif formé par (A) + (B) + (C).

La photopolymérisation est normalement exécutée à la température ambiante, c'est-à-dire à des températures d'environ 10 à 35° C. Comme sources du rayonnement, on utilise par exemple des tubes luminescents dont les maxima d'émission sont proches de la longueur d'onde d'absorption de l'initiateur, par exemple entre 300 et 400 nm pour les composés carbonylés. La distance des sources de rayonnement jusqu'aux objets à irradier s'élève de quelques centimètres à environ 30 cm et le temps d'exposition est de 1 à 30 minutes. Ce dernier dépend de la longueur d'onde de la lumière émise et de la puissance de la lampe.

Les paramètres opératoires favorables du procédé conforme à l'invention permettent une fabrication continue de vitrages en verre feuilleté verre-matière plastique.

Différents exemples d'exécution pour le procédé conforme à l'invention sont décrits en particulier ci-après:

EXEMPLE 1

Pour la fabrication d'un vitrage en verre de sécurité feuilleté de la structure feuille de verre de silicate/couche d'adhésif/pellicule de PVC souple/couche d'adhésif/feuille de verre de silicate, pour laquelle on utilise comme pellicule de PVC souple le produit GUTTAGENA limpide T62, on utilise une composition d'adhésif limpide consistant en 81,5% en poids d'acrylate de tétrahydrofurfuryle, 9% en poids d'acide acrylique, c'est-à-dire un rapport pondéral de pratiquement 9:1, 9% en poids de PVC postchloré à 60 jusqu'à 62% en poids de chlore (RHENOFLEX 63 de la société Dynamit Nobel), et 0,5% en poids d'un photoinitiateur (IRGACURE 651 de la société Ciba Geigy). On expose le paquet de couches à une irradiation d'une durée de 10 minutes au moyen d'un tube luminescent TLA 0,5 de 40 Watt de Philips à une distance d'irradiation de 5 cm. Le produit feuilleté obtenu présente de bonnes adhérences pour toutes les couches.

EXEMPLE DE COMPARAISON

Une composition d'adhésif consistant en 47,5% en poids d'acrylate de tétrahydrofurfuryle, 5% en poids d'acide acrylique, c'est-à-dire un rapport pondéral de 9,5:1, 47% en poids d'un polyester insaturé exempt de styrène (PALATAL A 410 de la société BASF) et 0,5% en poids d'un photoinitiateur (IRGACURE 651 de la société Ciba Geigy) et ayant la même viscosité que la composition d'adhésif de l'exemple 1 donne,lors d'un essai de fabrication d'un produit feuilleté conforme à l'exemple 1, un tel produit ayant une adhérence insuffisante.

EXEMPLE 2

On fabrique un vitrage en verre feuilleté de la constitution verre/couche d'adhésif/pellicule de PVC souple (GUTTAGENA limpide T62)/couche d'adhésif/verre. La composition d'adhésif utilisée consiste en 81,5% en poids d'acrylate de tétrahydrofurfuryle, 9% en poids d'acide acrylique, 9% en poids d'un copolymère de chlorure de vinyle et d'acétate de vinyle ayant une teneur en chlore de 47 à 48% en poids (VINNOL E15/45M de la société Dynamit Nobel) et 0,5% en poids d'un photoinitiateur (IRGACURE 651). Par une irradiation de 10 minutes au moyen de tubes luminescents TLA 05 de 40 Watt de Philips à une distance d'irradiation de 5 cm, on durcit les couches d'adhésif. L'adhésif présente une bonne adhérence pour toutes les couches.

EXEMPLE 3

On fabrique un vitrage en verre feuilleté de la constitution feuille de verre de silicate/couche d'adhésif/pellicule de PVC souple (GUTTAGENA limpide T62)/couche d'adhésif/feuille de verre de silicate. On utilise comme couche d'adhésif, une solution consistant en 49,1% en poids d'acrylate de tétrahydrofurfuryle, 27,3% en poids d'acrylate d'éthyldiglycol, 9% d'acide acrylique, 13,6% d'un PVC postchloré à 60 jusqu'à 62% en poids de chlore (RHENOFLEX 63 de la société Dynamit Nobel), et 1% du photoinitiateur IRGACURE 651. Par une irradiation de 10 minutes au moyen de tubes luminescents TLA 05 de 40 Watt de Philips à une distance d'irradiation de 5 cm, on durcit les couches d'adhésif. Le produit feuilleté prouve que la recette d'adhésif conforme à l'invention assure une bonne adhérence aux deux couches, à savoir au verre et au PVC souple.

EXEMPLE 4

On fabrique un vitrage en verre feuilleté de la même composition que dans l'exemple 3. On utilise comme couche d'adhésif, une solution consistant en 49,1% en poids d'acrylate de 2-tétrahydrofurfuryle,27,3% en poids d'acrylate de 2-hydroxypropyle, 9% d'acide acrylique, 13,6% d'un PVC postchloré à 60 jusqu'à 62% en poids de chlore (RHENOFLEx de la société Dynamit Nobel) et 1% du photoinitiateur IRGACURE 651. Par une irradiation de 10 minutes au moyen de tubes luminescents TLA 05 de 40 Watt de Philips à une distance d'irradiation de 5 cm, on durcit les couches d'adhésif. Le produit feuilleté prouve que la recette d'adhésif conforme à l'invention assure une bonne adhérence aux deux couches, à savoir au verre et à la pellicule de PVC souple.

EXEMPLE 5

Pour la fabrication d'un vitrage en verre feuilleté de la constitution indiquée dans les exemples 3 et 4, on utilise une composition d'adhésif consistant en 49,1% en poids d'acrylate de 2-tétrahydrofurfuryle, 27,3% en poids d'acrylate de phénoxyéthyle, 9% en poids d'acide acrylique, 13,6% en poids d'un PVC postchloré à 60 jusqu'à 62% en poids de chlore (RHENOFLEX 63 de la société Dynamit Nobel) et 1% en poids du photoinitiateur IRGACURE 651. Par une irradiation de 10 minutes au moyen de tubes luminescents TLA 05 de 40 Watt de Philips à une distance d'irradiation de 5 cm, on durcit les couches d'adhésif. Le produit feuilleté prouve que la recette d'adhésif conforme à l'invention assure une bonne adhérence aux deux couches, à savoir au verre et à la pellicule de PVC souple.

EXEMPLE 6

On fabrique un vitrage en verre feuilleté de la constitution feuille de verre de silicate/couche d'adhésif/feuille de verre acrylique/couche d'adhésif/feuille de verre de silicate. On utilise comme feuille de verre acrylique, une plaque d'une épaisseur de 1,5 mm du produit PLEXIGLAS GS 233 de la société RÖHM. L'adhésif utilisé consiste en une solution homogène de 81,5% en poids d'acrylate de tétrahydrofurfuryle, 9% en poids d'acide acrylique, c'est-à-dire d'un rapport pondéral de pratiquement 9:1, 9% en poids d'un PVC postchloré à 60 jusqu'à 62% en poids de chlore (RHENOFLEX 63 de la société Dynamit Nobel) et 0,5% en poids d'un photoinitiateur (IRGACURE 651 de la société Ciba Geigy). Par une irradiation de 10 minutes au moyen de tubes luminescents TLA 05 de 40 Watt de Philips à une distance d'irradiation de 5 cm, on durcit les couches d'adhésif. L'adhésif photopolymérisé présente une bonne adhérence à toutes les couches.

EXEMPLE 7

On fabrique un vitrage en verre feuilleté de la constitution feuille de verre de silicate/couche d'adhésif/plaque de polycarbonate. On utilise comme plaque de polycarbonate, une plaque d'une épaisseur de 0,25 mm revêtue de PMMA sur une face, telle qu'elle est disponible dans le commerce sous la dénomination LEXAN 8C20-112 de la société GENERAL ELECTRIC. On colle cette plaque de polycarbonate par sa face enduite de PMMA sur la feuille de verre de silicate. L'adhésif utilisé consiste en une solution homogène de 81,5% en poids d'acrylate de tétrahydrofurfuryle, 9% en poids d'acide acrylique, c'est-à-dire d'un rapport pondéral de pratiquement 9:1, 9% en poids de PVC postchloré à 60 jusqu'à 62% en poids de chlore (RHENOFLEX 63 de la société Dynamit Nobel) et 0,5% en poids d'un photoinitiateur (IRGACURE 651 de la société Ciba Geigy). Par une irradiation de 10 minutes au moyen de tubes luminescents TLA 0,5 de 40 Watt de Philips à une distance d'irradiation de 5 cm, on durcit les couches d'adhésif. L'adhésif présente une bonne adhérence à toutes les couches.

EXEMPLE 8

On se propose de fabriquer un vitrage en verre feuilleté thermiquement isolant ayant des propriétés de verre de sécurité qui consiste en deux feuilles de verre de silicate extérieures entre lesquelles est agencée et collée une plaque de poly-(méthacrylate de méthyle) expansé transparent. On utilise comme feuilles de verre de silicate, des feuilles de verre flotté d'une épaisseur de 2 mm et comme plaque en PMMA expansé, une plaque d'une épaisseur de 16 mm du produit IMACRYL-FOAM de la société JMC Acrylguss GmbH. On assemble les couches au moyen d'un adhésif qui consiste en une solution homogène de 81,5% en poids d'acrylate de tétrahydrofurfuryle, 9% en poids d'acide acrylique, c'est-à-dire d'un rapport pondéral de pratiquement 9:1, 9% en poids d'un PVC postchloré à 60 jusqu'à 62% en poids de chlore (RHENOFLEX 63 de la société Dynamit Nobel) et 0,5% en poids d'un photoinitiateur (IRGACURE 651 de la société Ciba Geigy). Par une irradiation de 10 minutes au moyen de tubes luminescents TLA 05 de 40 Watt de Philips à une distance d'irradiation de 5 cm, on durcit les couches d'adhésif. La couche d'adhésif présente une bonne adhérence à toutes les couches et le verre feuilleté obtenu a non seulement les propriétés d'une feuille de verre de sécurité, mais en outre des propriétés thermiquement isolantes remarquables.

**Revendications**

1. Procédé de fabrication d'un vitrage en verre feuilleté consistant en au moins une feuille de verre de silicate et au moins une épaisseur d'une matière plastique transparente suivant lequel la feuille de verre et l'épaisseur de matière plastique sont assemblées avec interposition d'une couche d'adhésif consistant en une solution homogène de monomères acryliques photopolymérisables (composant A), d'un polymère (composant B) et d'un photoinitiateur (composant C) et sont exposées à un rayonnement UV pour le durcissement de la couche d'adhésif, caractérisé en ce que le composant (A) consiste en un mélange d'au moins

(a₁) un acide carboxylique α,β-insaturé et

(a₂) au moins un ester d'acide carboxylique monofonctionnel α,β-insaturé contenant éventuellement aussi des atomes d'oxygène sous forme de radicaux éther et/ou de radicaux hydroxyle avec un alcool de 2 à 10 atomes de carbone

et le composant (B) consiste

pour la totalité ou pour partie prépondérante en un polymère formé de chlorure de vinyle qui est éventuellement postchloré.

2. Procédé suivant la revendication 1, caractérisé en ce que les composants polymérisables (a₁) et (a₂) sont contenus dans la couche d'adhésif dans un rapport pondéral (a₁) : (a₂) = (2 à 30) : (98 à 70).

3. Procédé suivant la revendication 1, caractérisé en ce que dans la couche d'adhésif, le rapport pondéral (A) : (B) : (C) = (95 à 70) : (5 à 30) : (0,1 à 7).

4. Procédé suivant la revendication 1, caractérisé en ce que l'acide carboxylique α,β-insaturé est l'acide acrylique et/ou l'acide méthacrylique.

5. Procédé suivant la revendication 1, caractérisé en ce que l'ester d'acide carboxylique α,β-insaturé est un ester de l'acide acrylique et/ou de l'acide méthacrylique.

6. Procédé suivant les revendications 1 et 5, caractérisé en ce que l'ester α,β-insaturé est un ester hydroxyalcoylique.

7. Procédé suivant les revendications 1, 5 et 6, caractérisé en ce que l'ester carboxylique α,β-insaturé est l'acrylate de 2-hydroxypropyle.

8. Procédé suivant les revendications 1 et 5, caractérisé en ce que l'ester α,β-insaturé est un ester alcoxyalcoylique et/ou un ester aryloxyalcoylique.

9. Procédé suivant les revendications 1, 5 et 8, caractérisé en ce que l'ester d'acide carboxylique α,β-insaturé est l'acrylate de tétrahydrofurfuryle.

10. Procédé suivant la revendication 1, caractérisé en ce que le polymère (B) est le PVC postchloré.

11. Procédé suivant la revendication 1, caractérisé en ce que le polymère (B) est un copolymère de chlorure de vinyle et d'acétate de vinyle.

12. Application du procédé suivant l'une quelconque des revendications 1 à 11 à la fabrication d'un vitrage en verre feuilleté consistant en deux feuilles de verre de silicate et en une pellicule ou plaque transparente de poly-(chlorure de vinyle) plastifié disposée et collée entre ces feuilles.

13. Application du procédé suivant l'une quelconque des revendications 1 à 11 pour la fabrication d'un vitrage en verre feuilleté thermiquement isolant consistant en deux feuilles de verre de silicate et en une plaque transparente en poly(méthacrylate de méthyle) expansé disposée et collée entre ces feuilles.

14. Adhésif photopolymérisable pour la fabrication d'un feuilleté verre-matière plastique transparent, consistant en une solution de monomère (A) et polymère (B) avec un photoinitiateur (C), caractérisée en ce que la fraction monomère (A) est un mélange d'au moins

(a₁) un acide carboxylique α,β-insaturé et

(a₂) au moins un ester d'acide carboxylique monofonctionnel α,β-insaturé contenant éventuellement aussi des atomes d'oxygène sous forme de radicaux éther et/ou de radicaux hydroxyle avec un alcool de 2 à 8 atomes de carbone, dans un rapport pondéral (a₁) : (a₂) = (2 à 30) : (98 à 70) et

le polymère (B) est formé pour la totalité ou pour partie prépondérante de chlorure de vinyle et peut éventuellement être postchloré et le rapport pondéral des composants (A) : (B) : (C) = (95 à 70) : (5 à 30) : (0,5 à 7).

## Claims

1. Process for the production of a laminated glass glazing consisting of at least one silicate glass sheet and at least one layer of a transparent plastics material, according to which the glass sheet and the plastics material layer are assembled with the interposing of an adhesive layer consisting of a homogeneous solution of photopolymerizable acrylic monomers (component A), a polymer (component B) and a photoinitiator (component C) and are exposed to UV radiation for hardening the adhesive layer, characterized in that the component A comprises a mixture of at least

(a₁) an α,β-unsaturated carboxylic acid and

(a₂) at least one α,β-unsaturated, monofunctional carboxylic acid ester optionally also containing oxygen atoms in the form of ether and/or hydroxyl radicals with an alcohol having two to ten carbon atoms and component (B) mainly or completely comprises a polymer formed from vinyl chloride, which is optionally post-chlorinated.

2. Process according to claim 1, characterized in that the polymerizable components ($a_1$) and ($a_2$) are contained in the adhesive layer in a weight ratio ($a_1$) : ($a_2$) = (2 to 30) : (98 to 70).

3. Process according to claim 1, characterized in that in the adhesive layer, the weight ratio is (A) : (B) : (C) = (95 to 70) : (5 to 30) : (0.1 to 7).

4. Process according to claim 1, characterized in that the $\alpha,\beta$-unsaturated carboxylic acid is acrylic and/or methacrylic acid.

5. Process according to claim 1, characterized in that the $\alpha,\beta$-unsaturated carboxylic acid ester is an ester of acrylic and/or methacrylic acid.

6. Process according to claims 1 and 5, characterized in that the $\alpha,\beta$-unsaturated ester is a hydroxyalkyl ester.

7. Process according to claims 1, 5 and 6, characterized in that the $\alpha,\beta$-unsaturated carboxylic ester is 2-hydroxypropyl acrylate.

8. Process according to claims 1 and 5, characterized in that the $\alpha,\beta$-unsaturated ester is an alkoxyalkyl and/or aryloxyalkyl ester.

9. Process according to claims 1, 5 and 8, characterized in that the $\alpha,\beta$-unsaturated carboxylic acid ester is tetrahydrofurfuryl acrylate.

10. Process according to claim 1, characterized in that the polymer (B) is post-chlorinated PVC.

11. Process according to claim 1, characterized in that the polymer (B) is a copolymer of vinyl chloride and vinyl acetate.

12. Application of the process according to any one of the claims 1 to 11 to the production of a laminated glass glazing comprising two silicate glass sheets and a transparent, plasticized poly(vinyl chloride) plate or film positioned and stuck between these sheets.

13. Application of the process according to any one of the claims 1 to 11 to the production of a thermally insulating laminated glass glazing comprising two silicate glass sheets and a transparent, expanded poly(methyl methacrylate) plate positioned and stuck between these sheets.

14. Photopolymerizable adhesive for the production of a transparent, plastics material - glass laminate, comprising a solution of monomer (A) and polymer (B) with a photoinitiator (C), characterized in that the monomer fraction (A) is a mixture of at least

($a_1$) one $\alpha,\beta$-unsaturated carboxylic acid and

($a_2$) at least one $\alpha,\beta$-unsaturated monofunctional carboxylic acid ester optionally also containing oxygen atoms in the form of ether and/or hydroxyl radicals with an alcohol having 2 to 8 carbon atoms in a weight ratio of ($a_1$) : ($a_2$) = (2 to 30) : (98 to 70) and

the polymer (B) is mainly or completely formed from vinyl chloride and can optionally be post-chlorinated and the weight ratio of the components is (A) : (B) : (C) = (95 to 70) : (5 to 30) : (0.5 to 7).

## Patentansprüche

1. Verfahren zur Herstellung einer Verbundglasscheibe aus wenigstens einer Silikatglasscheibe und wenigstens einer Schicht aus einem transparenten Kunststoff, bei dem die Glasscheibe und die Kunststoffschicht unter Zwischenschaltung einer aus einer homogenen Lösung von photopolymerisierbaren Acrylmonomeren (Komponente A), einem Polymer (Komponente B) und einem Photoinitiator (Komponente C) bestehenden Kleberschicht zusammengelegt und zur Aushärtung der Kleberschicht einer UV-Bestrahlung ausgesetzt werden, **dadurch gekennzeichnet**, daß die Komponente (A) aus einer Mischung aus mindestens

($a_1$) einer $\alpha,\beta$-ungesättigten Carbonsäure und

($a_2$) wenigstens einem monofunktionellen $\alpha,\beta$-ungesättigten, gegebenenfalls noch Sauerstoffatome in Form von Äthergruppen und/oder Hydroxylgruppen aufweisenden Carbonsäureester eines Alkohols mit 2 bis 10 C-Atomen,

und die Komponente (B) aus

einem ganz oder zum überwiegenden Teil aus Vinylchlorid aufgebautem Polymeren, das gegebenenfalls nachchloriert ist, bestehen.

2. Verfahren nach Anspruch 1, dadurch gekennzeichnet, daß die polymerisierbaren Komponenten (a₁) und (a₂) in der Kleberschicht im Gew.-Verhältnis (a₁) : (a₂) = (2 bis 30) : (98 bis 70) enthalten sind.

3. Verfahren nach Anspruch 1, dadurch gekennzeichnet, daß in der Kleberschicht das Gewichts-Verhältnis
(A) : (B) : (C) = (95 bis 70) : (5 bis 30) : (0,1 bis 7) beträgt.

4. Verfahren nach Anspruch 1, dadurch gekennzeichnet, daß eine $\alpha,\beta$-ungesättigte Carbonsäure Acrylsäure und/oder Methacrylsäure ist.

5. Verfahren nach Anspruch 1, dadurch gekennzeichnet, daß der $\alpha,\beta$-ungesättigte Carbonsäureester ein Acrylsäure- und/oder ein Methacrylsäureester ist.

6. Verfahren nach Anspruch 1 und 5, dadurch gekennzeichnet, daß der $\alpha,\beta$-ungesättigte Ester ein von einem Hydroxylgruppen enthaltenden Alkohol abgeleiteter Ester ist.

7. Verfahren nach Anspruch 1, 5 und 6, dadurch gekennzeichnet, daß der $\alpha,\beta$-ungesättigte Carbonsäureester 2-Hydroxypropylacrylat ist.

8. Verfahren nach Anspruch 1 und 5, dadurch gekennzeichnet, daß der $\alpha,\beta$-ungesättigte Ester ein von einem linearen oder verzweigt linearen Alkohol oder ein von einem cycloaliphatischen oder arylaliphatischen Alkohol abgeleiteter Ester ist.

9. Verfahren nach Anspruch 1, 5 und 8, dadurch gekennzeichnet, daß der $\alpha,\beta$-ungesättigte Carbonsäureester Tetrahydrofurfurylacrylat ist.

10. Verfahren nach Anspruch 1, dadurch gekennzeichnet, daß das Polymer (B) nachchloriertes PVC ist.

11. Verfahren nach Anspruch 1, dadurch gekennzeichnet, daß das Polymer (B) ein Copolymer von Vinylchlorid und Vinylacetat ist.

12. Anwendung des Verfahrens nach einem der Ansprüche 1 bis 11 zur Herstellung einer Verbundglasscheibe aus zwei Silikatglasscheiben und einer zwischen diesen angeordneten und mit diesen verklebten durchsichtigen Folie oder Platte aus weichgemachtem Polyvinylchlorid.

13. Anwendung des Verfahrens nach einem der Ansprüche 1 bis 11 zur Herstellung einer wärmeisolierenden Verbundglasscheibe aus zwei Silikatglasscheiben und einer zwischen diesen angeordneten und mit diesen verklebten transparenten Platte aus geschäumtem Polymethylmethacrylat.

14. Photopolymerisierbarer Kleber für die Herstellung eines transparenten Glas-Kunststoff-Verbundes, bestehend aus einer Monomer (A) - Polymer (B) - Lösung mit einem Photoinitiator (C),dadurch gekennzeichnet, daß der Monomeranteil (A) eine Mischung aus mindestens
    (a₁) einer $\alpha,\beta$-ungesättigten Carbonsäure und
    (a₂) wenigstens einem monofunktionellen $\alpha,\beta$-ungesättigten, gegebenenfalls nach Sauerstoffatome in Form von Äthergruppen und/oder Hydroxylgruppen aufweisenden Carbonsäureester eines Alkohols mit 2 bis 8 C-Atomen,im Gewichts-Verhältnis (a₁) : (a₂) = (2 bis 30) : (98 bis 70) ist, und
das Polymer (B) ganz oder zum überwiegenden Teil aus Vinylchlorid aufgebaut ist und gegebenenfalls nachchloriert sein kann, und das Gewichts-Verhältnis der Komponenten (A) : (B): (C) = (95 bis 70) : (5 bis 30) : (0,5 bis 7) beträgt.